# EUROPÄISCHE PATENTSCHRIFT

(11) **EP 2 405 254 B1**
(45) Veröffentlichungstag und Bekanntmachung des Hinweises auf die Patenterteilung: **04.06.2014**
(21) Anmeldenummer: 10168397.7
(22) Anmeldetag: 05.07.2010
(51) Int. Cl.: G01N 21/35, G01N 21/85, G01N 21/15, G01N 21/67

(54) **Optoelektronisches Verfahren zur Gasanalyse**
Optoelectronic method for gas analysis
Procédé optoélectronique pour l'analyse de gaz

(43) Veröffentlichungstag der Anmeldung: 11.01.2012
(73) Patentinhaber: SICK AG, 79183 Waldkirch (DE)
(72) Erfinder: Kaufmann, Jürgen, 79211, Denzlingen (DE); Nuber, Frank, 79312, Emmendingen (DE); Overdick, Dr. Michael, 79312, Emmendingen (DE); Schiffler, Rolf, 79341, Kenzingen (DE)
(74) Vertreter: Ludewigt, Christoph

(56) Entgegenhaltungen:
- CA-A1- 2 704 114
- DE-A1- 3 801 262
- DE-U1- 8 810 485
- US-A- 4 205 969
- US-B1- 7 605 389

## Beschreibung

Die Erfindung betrifft eine optoelektronische Vorrichtung zur optischen Gasanalyse sowie ein Verfahren zur optischen Analyse des Gases.

Bei derartigen Vorrichtungen handelt es sich beispielsweise um optische Spektrometer, Sichtweitenmessgeräte, in-situ Gasanalysatoren, Tunnelsensoren und dergleichen. Mit solchen Vorrichtungen werden bestimmte Gasanteile, z. B. Schwefelwasserstoff, Kohlenmonoxid, SO2, NH3, NO NO2, HCl, HF oder dergleichen, mittels optischer Transmission oder Lichtstreuung gemessen. Zumeist wird dabei die Konzentration dieser Gasanteile ermittelt.

Anwendungsgebiete sind zum Beispiel Emissionsmessungen von Industrieanlagen, bei denen die Abgase auf ihren Gehalt bestimmter molekularer Verbindungen überwacht werden müssen. Häufig sind die Gasströme, denen die optoelektronische Vorrichtung ausgesetzt ist, um die gewünschten Gasanteile zu messen, durch hohe Partikelbelastungen, wie zum Beispiel Rauch, Stäube oder andere Aerosole, gekennzeichnet. Diese hohen Partikelbelastungen verursachen eine große Lichtabsorption und/oder eine hohe Lichtstreuung, die die eigentliche Messung stark behindert bis unmöglich macht. So hat beispielsweise Schwefelwasserstoff eine sehr breite Absorption wie zum Beispiel auch ultrafeiner Staub. Es kann dann nicht mehr unterschieden werden, ob die Absorption von Schwefelwasserstoff herrührt oder von dem Staub.

Zur Reinigung von Gasen sind prinzipiell Elektrofilter bekannt. Ein solcher wird beispielsweise gemäß der DE 38 01 262 A1 eingesetzt, um in einem Motoransaugkanal einen Keramik-Messchip eines Luftmassenstrommessers vor Verschmutzung mit derartigen Partikeln zu schützen. Aus der DE 100 11 531 A1 ist eine Vorrichtung zur Probenentnahme für die extraktive Gasanalyse von Koksofenrohgasen und anderen verunreinigten Gasen bekannt, bei denen das Gas aus einem Koksofenrohr abgeleitet, mehrfach gefiltert, gekühlt und auch mittels eines Elektrofilters behandelt wird, um es schließlich einem Gasanalysator gereinigt zuführen zu können. Nachteile einer solchen extraktiven Gasanalytik sind die Änderungen der Filter über die Zeit, die Notwendigkeit der Filtereinigung oder des Filterwechsels, die unerwünschte Modifikation des Mediums durch die Gasentnahmestrecke, den Filter oder das Filtrat. Eine weitere Vorrichtung für die extraktive Gasanalyse ist aus der CA 2 704 114 A1 bekannt. Die Vorrichtung dort ist Teil eines Motorprüfstandes und dient zur optischen Analyse der Motorabgase mittels Absorption von IR-Strahlung. Mit Hilfe eines Chopperrades und entsprechender Auswertung wird ein optisches Untergrundrauschen berücksichtigt.

Demgegenüber erfolgen in-situ Gasanalysen häufig dann, wenn eine zusätzliche Behandlung des Gases nicht erforderlich und nicht gewünscht ist, also das Gas "direkt" gemessen werden soll.

Ausgehend von diesem Stand der Technik ist es Aufgabe der Erfindung, eine verbessertes Verfahren zur optischen Gasanalyse bereitzustellen, mit der der störende Einfluss der im Medium enthaltenen Partikel auf die beabsichtigte Messung verringert ist.

Die Aufgabe wird gelöst durch ein Verfahren mit den Merkmalen des Anspruchs 1.

Ein erfindungsgemäßes Verfahren zur optischen Analyse eines Gases in einem Gasstrom umfasst die Schritte:
- Aussenden eines Lichtstrahls in ein den Gasstrom durchsetzendes Messvolumen,
- Empfangen des Lichtstrahls mit einem Empfänger und Erzeugen von Empfangssignalen,
- Auswerten der Empfangssignale,
- lonisieren von Partikeln im Gasstrom in einem elektrischen Feld und Ablenken der ionisierten Partikel mit dem elektrischen Feld, so dass diese eine Ablenkung in Richtung aus dem Messvolumen heraus erfahren, um am Messvolumen vorbei strömen zu können, wobei
die Feldstärke moduliert wird und die Empfangssignale unter Berücksichtigung der Modulation ausgewertet werden.

Das angelegte elektrische Feld für die Ionen-Beschleunigungsvorrichtung muss also nicht unbedingt statisch sein, sondern kann auch dynamisch sein, insbesondere periodisch moduliert sein. Bei periodischer Modulation kann über die Auswertung des Empfangssignals in Abhängigkeit der Modulation auch die Gesamtkonzentration der Partikel im Medium gemessen oder zumindest abgeschätzt werden. Bei einer polydispersen Partikelgrößenverteilung lässt sich bei geeigneter Wahl der Modulationsfrequenz, der Modulationswellenform und genügend feiner zeitlicher Auflösung des optischen Messkanals sogar eine Aussage über die Partikelgrößenverteilung aus dem Empfangssignal ableiten. Diese beruht darauf, dass unterschiedlich große Partikel im elektrischen Feld eine unterschiedliche Mobilität aufweisen und daher unterschiedlich stark aus dem optischen Messvolumen hinaus- oder in es hineinbeschleunigt werden, wie dies analog grundsätzlich aus der O'Brien Theorie bekannt ist.

Eine optoelektronische Vorrichtung zur Durchführung des Verfahrens weist einen Lichtsender und einen Lichtempfänger auf, die zwischen sich eine ein Messvolumen umfassende optische Messtrecke definieren. In einer Auswerteeinrichtung sind die Empfangssignale des Lichtempfängers auswertbar, um letztendlich daraus die gewünschte Information, beispielsweise die Konzentration eines bestimmten Gasanteils zu gewinnen. Ein lonisator ist vorgesehen, der stromaufwärts vor der optischen Messstrecke angeordnet ist. Der lonisator bewirkt eine Ionisation der störenden Partikel, also zum Beispiel der Staubpartikel, Rauchpartikel oder dergleichen Aerosole, so dass die ionisierten Partikel mittels einer Ionen-Beschleunigungsvorrichtung durch elektrische oder auch magnetische Felder abgelenkt werden können. Dabei ist die Ionen-Beschleunigungsvorrichtung bzw. deren elektromagnetische Felder, derart ausgerichtet, dass die erzeugten Ionen eine Ablenkung erfahren, um am Messvolumen vorbei strömen zu können.

Der lonisator arbeitet mit elektromagnetischen Feldern, so dass die eigentliche Messkomponente, z. B. ein bestimmtes Molekül, vom Ionisator nicht ionisiert wird, sondern nur die störenden Partikel. Mittels der Ionen-Beschleunigungsvorrichtung können somit die störenden Partikel aus dem Messvolumen - zumindest zum großen Teil - herausgehalten werden, so dass die eigentliche Messung nicht gestört wird oder sogar erst ermöglicht wird. Trotz der in-situ Gasanalyse ist erfindungsgemäß somit dennoch eine zusätzliche Behandlung des staubbeladenen Gasstromes vorgesehen.

Der lonisator ist als elektrischer lonisator ausgebildet, so dass die Ionisation aufgrund elektrischer Feldeffekte erfolgt. Dabei ist der lonisator als Sprühelektrode eines Elektrofilters ausgebildet und die Ionen-Beschleunigungsvorrichtung durch die Sprühelektrode und eine Niederschlagselektrode des Elektrofilters. So kann sich um die Sprühelektrode eine Corona-Entladung ausbilden, die zur Ionisation der Partikel im Gas führt, die dann in Richtung der Niederschlagselektrode abgelenkt werden. Typische Feldstärken betragen z. B. 5kV/cm. Derartige Anordnungen nach Art eines Elektrofilters sind an sich bekannt und gut studiert, so dass eine Dimensionierung erleichtert ist.

Alternativ wäre es prinzipiell auch denkbar, dass die Ionen durch magnetische Felder abgelenkt werden.

Um die ionisierten Partikel so abzulenken, dass sie - zumindest größtenteils - um das Messvolumen herum strömen, ist in Weiterbildung der Erfindung vorgesehen, dass die Niederschlagselektrode in Strömungsrichtung gesehen wenigstens seitlich des Messvolumens angeordnet ist. Zumindest sollte die Ionisation und die Ablenkung in Strömungsrichtung gesehen vor dem Messvolumen erfolgen. Dazu muss die Niederschlagselektrode zumindest seitlich des Messvolumens angeordnet sein.

Bei Verwendung mehrerer Sprühelektroden kann die Wahrscheinlichkeit der Ionisation erhöht werden, wobei vorteilhafterweise die mehreren Sprühelektroden stromaufwärts der optischen Messstrecke angeordnet sind.

Wenn das optische Messvolumen sich in einem Bereich ohne Strömung befindet, ist in einer weiteren Ausführungsform der Erfindung die Sprühelektrode des Elektrofilters in dem Messvolumen angeordnet und eine Niederschlagselektrode außerhalb des Volumens angeordnet. Dann werden nämlich die ionisierten Partikel aus dem Messvolumen heraus in Richtung auf die Niederschlagselektrode beschleunigt, also abgelenkt.

Häufig ist dies der Fall, wenn das Messvolumen in einem mechanischen Filter, vorzugsweise einer Filterfritte, angeordnet ist. In diesem Fall ist der Elektrofilter in die Filterfritte integriert.

Dabei ist die Sprühelektrode vorteilhafterweise zumindest bereichsweise mittig im Messvolumen angeordnet und die Niederschlagselektrode an den Innenflächen des mechanischen Filters angeordnet oder wird durch das Filter selbst gebildet.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung einer ersten Ausführungsform der optoelektronischen Vorrichtung zur Gasanalyse in einem Gasstrom;
- Fig. 2: die Vorrichtung aus Fig. 1 entlang der Linie I-I;
- Fig. 3: eine schematische Darstellung einer zweiten Ausführungsform;
- Fig. 4 und 5: Darstellungen wie Fig. 2 von weiteren Ausführungsformen.

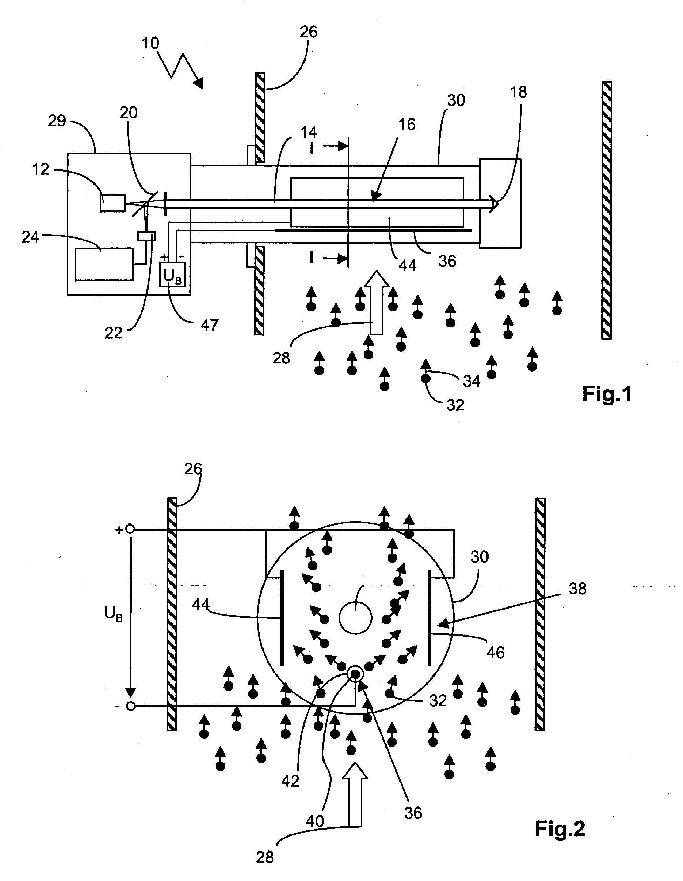

Eine optoelektronische Vorrichtung 10 zur Gasanalyse in einem Gasstrom 28 weist in einem in Fig. 1 dargestellten, ersten Ausführungsbeispiel einen Lichtsender 12 auf, der einen Sendelichtstrahl 14 aussendet. Der Sendelichtstrahl 14 definiert ein Messvolumen 16 und wird nach Reflektion an einem Retroreflektor 18 und einem Teilerspiegel 20 von einem Lichtempfänger 22 empfangen. Die durch die Lichtstrahlen 14 gebildete optische Messtrecke umfasst das Messvolumen 16.

Der Lichtempfänger 22 erzeugt in Abhängigkeit des auftreffenden Lichts Empfangs-signale, die in einer Auswerteeinrichtung 24 ausgewertet werden.

Eine solche optoelektronische Vorrichtung 10 kann beispielsweise als Transmissiometer ausgebildet sein, so dass mit dem Lichtempfänger 22 die Intensität des durch das Messvolumen 16 hindurchtretenden Lichts gemessen wird. In der Regel ist der Lichtsender 12 auf eine bestimmte Wellenlänge abgestimmt, die von einem zu untersuchenden Gasanteil, beispielsweise Schwefelwasserstoff, absorbiert wird. Über das am Lichtempfänger 22 empfangene Licht kann dann eine Aussage gemacht werden, wie hoch die Konzentration des interessierenden Gasanteils, z. B. von Schwefelwasserstoff, in dem Gasstrom 28 ist, der in einem Kamin 26 geführt ist.

Die optoelektronische Vorrichtung 10 umfasst ein Gehäuse 29, mit einem lanzenartigen Fortsatz 30, wobei in dem Gehäuse 29 die optoelektronischen Einheiten, wie Lichtsender 12 Lichtempfänger 22 und Auswerteeinrichtung 24 angeordnet sind und in dem lanzenartigen Fortsatz 30 das Licht durch das Messvolumen 16 geführt ist und am Ende dieses Fortsatzes 30 der Retroreflektor 18 gehalten ist. Der lanzenartige Fortsatz 30 hat dabei in dem Bereich, in dem er in den Kamin 56 hineinragt, selbstverständlich Öffnungen, so dass der Gasstrom 28 durch das Messvolumen 16 strömen kann.

Der in dem Kamin 26 geführte Gasstrom 28, der lediglich durch einen Pfeil 28 angedeutet ist, kann mit Partikeln 32 belastet sein. Bei diesen Partikeln 32 kann es sich um Staub, Rauch oder sonstige Aerosole handeln, wobei die Partikel 32 die eigentliche optische Messung in dem Messvolumen 16 stören.

Um die Partikel 32 aus dem Messvolumen 16 herauszuhalten, um sie also soweit abzulenken, dass sie zumindest größtenteils an dem Messvolumen 16 vorbei strömen können, wobei die Strömungsrichtung der Partikel durch die jeweiligen Pfeile 34 angedeutet ist, weist die Vorrichtung 10 einen Ionisator 36 und eine Ionen-Beschleunigungsvorrichtung 38 auf, die in spezieller Weise angeordnet sind, um Ionen in die gewünschte Richtung ablenken zu können.

Der Ionisator 36 besteht in diesem Ausführungsbeispiel aus einer Sprühelektrode 40, die von einem Isolator 42 umgeben ist. Die Sprühelektrode 40 ist auch ein Teil der Ionen-Beschleunigungsvorrichtung 38, die weiter Niederschlagselektroden 44 und 46 aufweist.

Zum Ablenken der Partikel 32 wird nun zwischen der Sprühelektrode 40 und den Niederschlagselektroden 44 und 46 eine Hochspannung U_{B} angelegt, die von einer Spannungsquelle 47 bereitgestellt wird. Bei geeigneter Hochspannung U_{B} bildet sich um die Sprühelektrode 40 herum eine Corona-Entladung, die zur Ionisierung der Partikel 32 führt. Die so aufgeladenen Partikel 32 erfahren nun eine Kraft in Richtung des elektrischen Feldes und somit eine Kraft in Richtung auf die Niederschlagselektrode 44 oder 46, die wenigstens seitlich des Messvolumens 16 angeordnet sind. Die Sprühelektrode 40 selbst ist stromaufwärts vor dem Messvolumen 16 angeordnet. Im Ergebnis werden dadurch die Partikel 32 in der Darstellung der Fig. 2 links und rechts am Messvolumen 16 vorbeigeführt. Andere Anordnungen sind denkbar, wobei die immer so gewählt sein müssen, dass auf die ionisierten Partikel 32 eine Kraft ausgeübt wird, um die Partikel letztendlich aus dem Messvolumen heraus zu halten, also den Partikelstrom an dem Messvolumen vorbei zu führen.

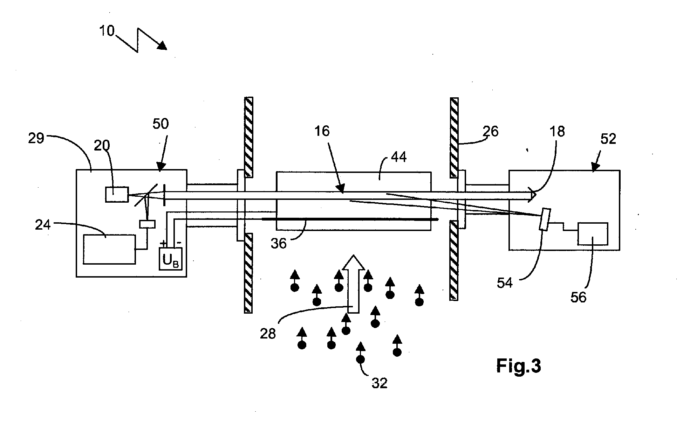

In Fig. 3 ist ein zweites Ausführungsbeispiel der opto-elektronischen Vorrichtung 10 dargestellt, bei der die optoelektronische Vorrichtung 10 zweigeteilt ist, und einen ersten Vorrichtungsteil 50 aufweist, der wie der des ersten Ausführungsbeispiels aufgebaut ist und einen zweiten Vorrichtungsteil 52, der auf der gegenüberliegenden Seite des Kamins 26 angeordnet ist und in dem beispielsweise der Reflektor 18 angeordnet sein könnte. In diesem zweiten Vorrichtungsteil 52 kann auch ein zweiter Lichtempfänger 54 angeordnet sein, der so angeordnet ist, dass er beispielsweise Streulicht empfangen kann, so dass mit diesem Messgerät 10 auch nach dem Prinzip der Streulichtmessung eine Konzentrationsauswertung von Gasanteilen vorgenommen werden kann. Das mit dem Empfänger 54 aufgenommene Streulicht wird dazu in einer zweiten Auswerteeinrichtung 56 ausgewertet.

Wie das erste Ausführungsbeispiel weist auch dieses Ausführungsbeispiel einen lonisator 36 und eine Ionen-Beschleunigungsvorrichtung 38 zur Ablenkung der Partikel 32 um das Messvolumen 16 herum auf, die in gleicher Weise aufgebaut und angeordnet sind.

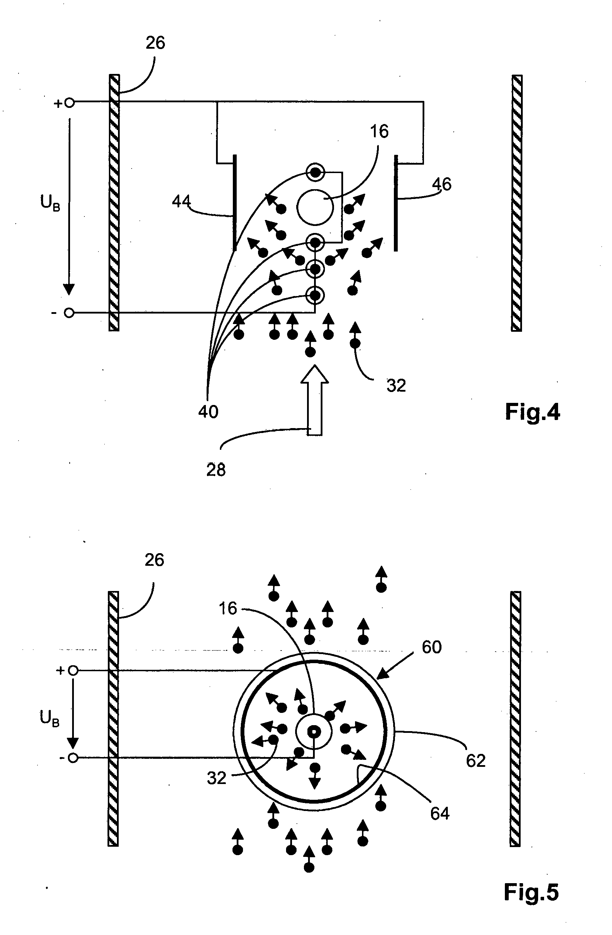

Für den Ionisator 36 und die Ionen-Beschleunigungsvorrichtung 38 bestehen eine Vielzahl von Möglichkeiten der Ausbildung. Eine weitere dieser Möglichkeiten ist in Fig. 4 dargestellt, bei der der Ionisator 36 mehrere, in diesem Beispiel vier, Sprühelektroden 40 aufweist, von denen drei in Strömungsrichtung 28 vor dem Messvolumen 16 angeordnet sind und eine hinter dem Messvolumen 16. Die Niederschlagselektroden 44 und 46 sind wiederum seitlich angeordnet. Durch das Vorsehen mehrerer Sprühelektroden 40 soll die Wahrscheinlichkeit für die Ionisation der Partikel 32 erhöht werden, so dass die Partikel 32 effizienter abgelenkt werden.

Fig. 5 schließlich zeigt eine weitere Ausführungsform der Vorrichtung, bei der das Messvolumen 16 von einem mechanischen Filter 60 umgeben ist, der in diesem Fall als Filterfritte 62 ausgebildet ist. Die Filterfritte 62 kann beispielsweise aus poröser Keramik oder porösem Metall bestehen und könnte beispielsweise in dem lanzenartigen Fortsatz 30 des ersten Ausführungsbeispiels angeordnet sein. Trotz des Filters 60 gelangen feinste Staubteilchen durch Diffusion in das Messvolumen 16 und stören dort die Messung. Um auch hier wiederum die Partikel 32 aus dem Messvolumen 16 herauszuhalten, ist jetzt im Zentrum dieser zylindersymmetrischen Anordnung des Filters 60 die Sprühelektrode 40 angeordnet, also mittig in dem Messvolumen 16. Eine Niederschlagselektrode 64 ist auf der Innenseite des Filters 60 entweder durch den Filter 60 selber, wenn dieses aus Metall besteht, oder durch eine poröse Metallschicht, die auf die Innenseite des Filters 60 aufgebracht ist, gebildet. Alternativ könnte auch eine Gitterelektrode (nicht dargestellt) auf der Filterinnenfläche vorgesehen sein.

Da das Gas nur diffusiv in den Innenraum des Filters 60 gelangt, ist das Gas im Innenraum praktisch ruhend. Deshalb werden ionisierte Partikel 32 aus dem Messvolumen heraus in Richtung auf die Niederschlagselektrode 64 beschleunigt und können die optische Messung im Messvolumen 16 nicht mehr stören.

Die Vorrichtung 10 arbeitet wie folgt:

Der Lichtsender 12 sendet den Lichtstrahl 14 aus, der das im Gasstrom gelegene Messvolumen durchsetzt. Abhängig von den Gasanteilen in dem Messvolumen wird ein Teil des Lichts absorbiert und das restliche Licht von dem Lichtempfänger 22 empfangen, der entsprechend der Lichtmenge Empfangssignale erzeugt. Die Empfangssignale werden in der Auswerteeinheit 24 ausgewertet, um letztendlich die Konzentration eines interessierenden Gasanteils zu erhalten.

Um die störenden Partikel 32 aus dem Messvolumen 16 herauszuhalten, werden die Partikel 32 von dem Ionisator 36 ionisiert und die ionisierten Partikel 32 durch die aus der Sprühelektrode 40 und den Niederschlagselektroden 44 und 46 bzw. 62 bestehende Ionen-Beschleunigungsvorrichtung 38 abgelenkt, so dass sie zumindest größtenteils am Messvolumen 16 vorbei strömen, bzw. aus dem Messvolumen 16 herausgehalten werden.

In Weiterbildung dieses erfindungsgemäßen Verfahrens kann die Feldstärke moduliert und die Empfangssignale unter Berücksichtigung der Modulation ausgewertet werden. Das angelegte elektrische Feld für die Ionen-Beschleunigungsvorrichtung muss also nicht unbedingt statisch sein, sondern kann auch dynamisch sein, insbesondere periodisch moduliert sein. Bei periodischer Modulation kann über die Auswertung des Empfangssignals in Abhängigkeit der Modulation auch die Gesamtkonzentration der Partikel im Medium gemessen oder zumindest abgeschätzt werden. Bei einer polydispersen Partikelgrößenverteilung lässt sich bei geeigneter Wahl der Modulationsfrequenz, der Modulationswellenform und genügend feiner zeitlicher Auflösung des optischen Messkanals sogar eine Aussage über die Partikelgrößenverteilung aus dem Empfangssignal ableiten. Dies beruht darauf, dass unterschiedlich große Partikel im elektrischen Feld eine unterschiedliche Mobilität aufweisen und daher unterschiedlich stark aus dem optischen Messvolumen hinaus- oder hineinbeschleunigt werden.

## Patentansprüche

1. Verfahren zur optischen Analyse eines Gases in einem Gasstrom, der neben einem zu messenden Gasanteil, dessen Konzentration bestimmt werden soll, die Konzentrationsbestimmung störende Partikel (32), wie Staub, Rauch oder sonstige Aerosole, enthält, mit den Schritten:
- Aussenden eines Lichtstrahls in ein den Gasstrom durchsetzendes Messvolumen,
- Empfangen des Lichtstrahls mit einem Empfänger und Erzeugen von Empfangssignalen,
- Auswerten der Empfangssignale,
**gekennzeichnet durch** die weiteren Schritte:
- lonisieren der Partikel im Gasstrom in einem elektrischen Feld und Ablenken der ionisierten Partikel mit dem elektrischen Feld, so dass diese eine Ablenkung in Richtung aus dem Messvolumen heraus erfahren, um am Messvolumen vorbei strömen zu können,
- wobei die Feldstärke moduliert wird und die Empfangssignale unter Berücksichtigung der Modulation ausgewertet werden.

## Claims

1. Method for optically analyzing a gas in a gas flow, which contains, besides a gas content to be measured and which concentration shall be determined, particles, like dust particles, smoke particles or other aerosols, which interfer with the concentration measurement, comprising the steps of:
- transmitting a light beam into a measurement volume penetrating the gas flow,
- receiving the light beam with a receiver and generating received signals,
- evaluating the received signals,
**characterized by** further steps
- ionizing the particles in the gas flow in an electric field and deflecting the ionized particles with the electric field so that they experience a deflection in a direction out of the measurement volume so that they can flow past the measurement volume,
- wherein the field strength is modulated and the received signals are evaluated under consideration of the modulation.

## Revendications

1. Méthode d'analyse optique d'un gaz dans un courant gazeux, qui contient des particules d'interférence (32) tels que la poussière, de la fumée ou d'autres aérosols en plus d'un composant de gaz à mesurer, dont la concentration doit être déterminée, comprenant les étapes consistant à:
- Émettre un faisceau lumineux dans un volume de mesure qui traverse le flux de gaz,
- Recevoir le faisceau lumineux d'un récepteur et produire de signaux reçus,
- Évaluer les signaux reçus,
**caractérisé par** les autres étapes consistant à:
- Ioniser les particules dans le courant de gaz dans un champ électrique et dévier les particules ionisées à l'aide du champ électrique de sorte que les particules subissent une déviation dans une direction hors du volume de mesure de manière à s'écouler au-delà du volume de mesure,
- dans lequel l'intensité du champ est modulée et les signaux reçus sont évalués en considération la modulation.
